# EUROPEAN PATENT APPLICATION

(11) **EP 4 667 530 A1**
(43) Date of publication of application: **24.12.2025**
(21) Application number: 24756646.6
(22) Date of filing: 30.01.2024
(51) Int. Cl.: C08L 67/04

(54) **MOLDED BODY COMPRISING POLY(3-HYDROXYALKANOATE)-BASED RESIN COMPOSITION**

(30) Priority: 17.02.2023 JP 2023023200
(71) Applicant: Kaneka Corporation, Osaka-shi, Osaka 530-8288 (JP)
(72) Inventor: SUNAGAWA, Takenobu, Osaka 566-0072 (JP)
(74) Representative: Vossius & Partner Patentanwälte Rechtsanwälte mbB
(86) International application number: PCT/JP2024/002841
(87) International publication number: WO 2024/171795

(57) **Abstract**

A molded article contains a poly(3-hydroxyalkanoate) resin composition. The resin composition contains a poly(3-hydroxyalkanoate) copolymer (A) having a weight-average molecular weight of 20 × 10⁴ to 100 × 10⁴ and a poly(3-hydroxyalkanoate) copolymer (B) having a higher weight-average molecular weight than the copolymer (A). The polymer (B) is a copolymer that contains 3-hydroxybutyrate units and other hydroxyalkanoate units and in which the proportion of the other hydroxyalkanoate units is from 1 to 23 mol%. The amount of the copolymer (A) is more than 80 wt% of the total amount of the copolymers (A) and (B).

## Description

### Technical Field

The present invention relates to a molded article containing a poly(3-hydroxyalkanoate) resin composition.

### Background Art

In recent years, waste plastics have caused an adverse impact on the global environment, for example, by affecting ecosystems, emitting hazardous gases during combustion, or generating a huge amount of combustion heat which contributes to global warming. As materials that can be a solution to this problem, biodegradable plastics are under active development.

Biodegradable plastics, in particular aliphatic polyester resins, that are microbially produced using a plant-derived material as a carbon source are attracting attention in terms of biodegradability and carbon neutrality. Among the aliphatic polyester resins, poly(3-hydroxyalkanoate) resins such as poly(3-hydroxybutyrate) homopolymer resin, poly(3-hydroxybutyrate-co-3-hydroxyvalerate) copolymer resin, poly(3-hydroxybutyrate-co-3-hydroxyhexanoate) copolymer resin, and poly(3-hydroxybutyrate-co-4-hydroxybutyrate) copolymer resin are the focus of attention.

In general, the poly(3-hydroxyalkanoate) resins, in particular poly(3-hydroxyalkanoate) copolymer resins, are characterized by a low tensile strain, due to which molded articles obtained using these resins suffer from poor mechanical properties.

Patent Literature 1 discloses a different type of resin, which is a high-molecular-weight aliphatic polyester that is composed of structural units derived from an aliphatic dicarboxylic acid having a branched hydrocarbon group and that has a number-average molecular weight of 3 × 10⁴ to 20 × 10⁴. The literature teaches that the use of this polyester leads to improved tearing resistance of a sheet or film.

Patent Literature 2 discloses that blending a biodegradable 3-hydroxyalkanoate copolymer with a plasticizer having a particular structure results in an increase in tensile elongation.

### Citation List

### Patent Literature

PTL 1: Japanese Patent No. 3228690
PTL 2: Japanese Patent No. 5264487

### Summary of Invention

### Technical Problem

Patent Literature 1 fails to disclose any teaching about poly(3-hydroxyalkanoate) resins.

The composition described in Patent Literature 2 requires the use of an additive having a particular structure and is unfortunately limited in how the composition is composed.

An investigation by the present inventors has revealed that an attempt to increase the tensile strain of a molded article containing a poly(3-hydroxyalkanoate) resin could involve an increase in the torque during kneading in the production of the molded article and that the increased torque causes an undesirably large amount of heat which induces thermal decomposition of the resin.

In view of the above circumstances, the present invention aims to provide a poly(3-hydroxyalkanoate) resin-containing molded article that has an increased tensile strain and that can be produced under reduced torque.

### Solution to Problem

As a result of intensive studies with the goal of solving the above problem, the present inventors have found that when a poly(3-hydroxyalkanoate) copolymer (A) having a weight-average molecular weight of 20 × 10⁴ to 100 × 10⁴ and a poly(3-hydroxyalkanoate) resin (B) having a higher weight-average molecular weight than the copolymer (A) and having a particular monomer composition are combined in such proportions that the amount of the copolymer (A) is more than 80 wt%, a molded article produced from the mixture of the copolymer (A) and the resin (B) can have an increased tensile strain and the torque in the production of the molded article can be kept to a relatively low level. Based on this finding, the inventors have completed the present invention.

Specifically, the present invention relates to a molded article containing a poly(3-hydroxyalkanoate) resin composition, wherein
the resin composition contains:
   a poly(3-hydroxyalkanoate) copolymer (A) having a weight-average molecular weight of 20 × 10⁴ to 100 × 10⁴; and
   a poly(3-hydroxyalkanoate) copolymer (B) having a higher weight-average molecular weight than the poly(3-hydroxyalkanoate) copolymer (A), wherein
the term "weight-average molecular weight" as used herein refers to a polystyrene-equivalent weight-average molecular weight determined by gel permeation chromatography using a chloroform solvent,
the poly(3-hydroxyalkanoate) copolymer (B) is a copolymer that contains 3-hydroxybutyrate units and other hydroxyalkanoate units and in which a proportion of the other hydroxyalkanoate units is from 1 to 23 mol%, and
an amount of the poly(3-hydroxyalkanoate) copolymer (A) is more than 80 wt% of a total amount of the poly(3-hydroxyalkanoate) copolymer (A) and the poly(3-hydroxyalkanoate) copolymer (B).

The present invention further relates to a method for producing the molded article, the method including the step of melting and kneading the poly(3-hydroxyalkanoate) resin composition and then molding the poly(3-hydroxyalkanoate) resin composition.

### Advantageous Effects of Invention

The present invention can provide a poly(3-hydroxyalkanoate) resin-containing molded article that has an increased tensile strain and that can be produced under reduced torque.

The increase in tensile strain allows for improvement in practical mechanical properties of the poly(3-hydroxyalkanoate) resin-containing molded article.

In addition, the torque during kneading can be kept to a relatively low level, and this can reduce the amount of heat generated by the kneading and prevent the thermal decomposition of the poly(3-hydroxyalkanoate) resins during the kneading.

Furthermore, since the improvement in tensile strain is thanks to the compositions of the poly(3-hydroxyalkanoate) resins themselves, there is no need to add a special additive to achieve the improvement in tensile strain.

According to a preferred aspect of the present invention, a wide range of temperature conditions can be employed in production of the poly(3-hydroxyalkanoate) resin-containing molded article. Thus, the molding can be performed stably, and the molded article produced can have a relatively uniform thickness or weight and have a good appearance. Furthermore, the productivity can be improved to allow for high-speed mass production of the molded article.

### Description of Embodiments

Hereinafter, an embodiment of the present invention will be described. The present invention is not limited to the embodiment described below.

A molded article according to the present embodiment is made of a resin composition containing poly(3-hydroxyalkanoate) resins as essential resin components. The molded article can be produced by melting and kneading the resin composition under heating and then cooling and solidifying the resin composition.

The resin composition of which the molded article according to the present embodiment is made contains at least a poly(3-hydroxyalkanoate) copolymer (A) having a weight-average molecular weight of 20 × 10⁴ to 100 × 10⁴ and a poly(3-hydroxyalkanoate) copolymer (B) having a higher weight-average molecular weight than the copolymer (A).

### <Poly(3-Hydroxyalkanoate) Copolymers (A) and (B)>

Each of the poly(3-hydroxyalkanoate) copolymers (A) and (B) is a biodegradable aliphatic polyester (preferably a polyester containing no aromatic ring) and a copolymer containing at least one type of 3-hydroxyalkanoate units or two or more types of 3-hydroxyalkanoate units. In this application, poly(3-hydroxyalkanoate) copolymers are also referred to as P3HAs.

The 3-hydroxyalkanoate units are preferably represented by the following formula (1).

[-CHR-CH₂-CO-O-] (1)

In the formula (1), R is an alkyl group represented by CₚH₂ₚ₊₁, and p is an integer from 1 to 15. Examples of R include linear or branched alkyl groups such as methyl, ethyl, propyl, methylpropyl, butyl, isobutyl, t-butyl, pentyl, and hexyl groups. The integer p is preferably from 1 to 10 and more preferably from 1 to 8.

The poly(3-hydroxyalkanoate) copolymer (A) and/or the poly(3-hydroxyalkanoate) copolymer (B) is particularly preferably a microbially produced poly(3-hydroxyalkanoate) copolymer. In the microbially produced poly(3-hydroxyalkanoate) copolymer, all of the 3-hydroxyalkanoate units are contained as (R)-3-hydroxyalkanoate units.

The poly(3-hydroxyalkanoate) copolymer (A) and/or the poly(3-hydroxyalkanoate) copolymer (B) preferably contains 50 mol% or more, more preferably 60 mol% or more, even more preferably 70 mol% or more, of 3-hydroxyalkanoate units (in particular, the units represented by the formula (1)) in the total structural units (monomer units). Each of the poly(3-hydroxyalkanoate) copolymers may contain only two or more types of 3-hydroxyalkanoate units as polymer structural units or may contain other units (such as 4-hydroxyalkanoate structural units) in addition to one type or two or more types of 3-hydroxyalkanoate units.

The poly(3-hydroxyalkanoate) copolymer (A) and/or the poly(3-hydroxyalkanoate) copolymer (B) is preferably a copolymer containing 3-hydroxybutyrate (hereinafter also referred to as 3HB) units and other hydroxyalkanoate units. Preferably, all of the 3-hydroxybutyrate units are (*R*)-3-hydroxybutyrate units.

The other hydroxyalkanoate units may be 3-hydroxyalkanoate units other than 3HB units or may be hydroxyalkanoate units (such as 4-hydroxyalkanoate units) other than 3-hydroxyalkanoate units. The other hydroxyalkanoate units may include only one type of hydroxyalkanoate units or may include two or more types of hydroxyalkanoate units.

Specific examples of the poly(3-hydroxyalkanoate) copolymer (A) and/or the poly(3-hydroxyalkanoate) copolymer (B) include poly(3-hydroxybutyrate-co-3-hydroxypropionate), poly(3-hydroxybutyrate-co-3-hydroxyvalerate) abbreviated as P3HB3HV, poly(3-hydroxybutyrate-co-3-hydroxyvalerate-3-hydroxyhexanoate), poly(3-hydroxybutyrate-co-3-hydroxyhexanoate) abbreviated as P3HB3HH, poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3-hydroxyundecanoate), and poly(3-hydroxybutyrate-co-4-hydroxybutyrate) abbreviated as P3HB4HB. In particular, P3HB3HH or P3HB4HB is preferred in terms of, for example, the resin composition productivity and the mechanical properties of the resin composition. Particularly preferred is P3HB3HH.

P3HAs can be microbially produced. Such a microbially produced P3HA is typically a P3HA consisting only of *D*- (*R*-) hydroxyalkanoic acid repeating units. Among microbially produced P3HAs, P3HB3HH, P3HB3HV, P3HB3HV3HH, and P3HB4HB are preferred since they are easy to industrially produce. P3HB3HH, P3HB3HV, and P3HB4HB are more preferred and P3HB3HH is particularly preferred. The P3HA (A) and the P3HA (B) may be copolymers composed of the same monomers or different monomers.

The P3HA-producing microorganism is not limited to a particular type and may be any microorganism having a P3HA-producing ability. The first example of P3HB-producing bacteria is *Bacillus megaterium* discovered in 1925, and other known examples include naturally occurring microorganisms such as *Cupriavidus necator* (formerly classified as *Alcaligenes eutrophus* or *Ralstonia eutropha*) and *Alcaligenes latus.* These microorganisms accumulate P3HB in their cells.

Known examples of bacteria that produce copolymers of 3HB with other hydroxyalkanoates include *Aeromonas caviae* which is a P3HB3HV- and P3HB3HH-producing bacterium and *Alcaligenes eutrophus* which is a P3HB4HB-producing bacterium. In particular, in order to increase the P3HB3HH productivity, *Alcaligenes eutrophus* AC32 (FERM BP-6038; see T. Fukui, Y. Doi, J. Bacteriol., 179, pp. 4821-4830 (1997)) having a P3HA synthase gene introduced is preferred. Such a microorganism is cultured under suitable conditions to allow the microorganism to accumulate a P3HA in its cells, and the microbial cells accumulating the P3HA are used. Instead of the above microorganisms, a genetically modified microorganism having any suitable P3HA synthesis-related gene introduced may be used depending on the P3HA to be produced. The culture conditions including the type of the substrate may be optimized depending on the P3HA to be produced.

The weight-average molecular weight of the poly(3-hydroxyalkanoate) copolymer (A) is from 20 × 10⁴ to 100 × 10⁴. The fact that the weight-average molecular weight of the P3HA (A) is 20 × 10⁴ or more allows for production of the molded article through melting and kneading under heating and the subsequent cooling and solidification. In addition, the molded article can have a desired tensile strain and practical mechanical properties. Controlling the weight-average molecular weight of the P3HA (A) to 100 × 10⁴ or less further improves the processability of the resin composition, making the molding easier. The weight-average molecular weight of the P3HA (A) is preferably from 20 × 10⁴ to 80 × 10⁴. The weight-average molecular weight may be 23 × 10⁴ or more. The weight-average molecular weight is more preferably from 25 × 10⁴ to 70 × 10⁴ and even more preferably from 30 × 10⁴ to 60 × 10⁴.

The weight-average molecular weight of a P3HA can be determined as a polystyrene-equivalent molecular weight measured by gel permeation chromatography (GPC; "High-performance liquid chromatograph 20A system" manufactured by Shimadzu Corporation) using polystyrene gels ("K-G 4A" and "K-806M" manufactured by Showa Denko K.K.) as columns and chloroform as a mobile phase. In this GPC, calibration curves are created using polystyrenes having weight-average molecular weights of 31,400, 197,000, 668,000, and 1,920,000. The columns used in the GPC may be any columns suitable for measurement of the molecular weight.

The poly(3-hydroxyalkanoate) copolymer (A) is preferably a copolymer that contains 3-hydroxybutyrate units and other hydroxyalkanoate units and in which the proportion of the other hydroxyalkanoate units is from 1 to 23 mol%. When the proportion of the other hydroxyalkanoate units is in this range, the poly(3-hydroxyalkanoate) resin composition can have a good balance of flexibility and stiffness, and the productivity can be improved. The proportion is more preferably from 1 to 20 mol%, even more preferably from 1 to 15 mol%, and particularly preferably from 1 to 10 mol%. The proportion may be at least 2 mol% or at least 3 mol%.

The monomer proportions in a P3HA can be measured by a method such as gas chromatography. For example, WO 2014/020838 A1 can be used as a reference for the measurement.

The poly(3-hydroxyalkanoate) copolymer (B) has a higher weight-average molecular weight than the P3HA (A) described above. The use of the P3HA (B) having a relatively high weight-average molecular weight in combination with the P3HA (A) makes it possible to keep the torque during melting and kneading to a relatively low level and improve the tensile strain of the molded article.

In terms of improving the tensile strain of the molded article, the difference between the weight-average molecular weights of the P3HA (B) and the P3HA (A) is preferably 20 × 10⁴ or more, more preferably 30 × 10⁴ or more, and even more preferably 40 × 10⁴ or more. The upper limit of the difference in weight-average molecular weight is not limited to a particular value. The difference is preferably up to 200 × 10⁴, more preferably up to 100 × 10⁴, even more preferably up to 80 × 10⁴, and particularly preferably up to 60 × 10⁴.

The weight-average molecular weight of the poly(3-hydroxyalkanoate) copolymer (B) is preferably from 30 × 10⁴ to 300 × 10⁴. The use of the P3HA (B) having a weight-average molecular weight of 30 × 10⁴ or more makes it easier to improve the tensile strain of the molded article. Controlling the weight-average molecular weight of the P3HA (B) to 300 × 10⁴ or less further improves the processability of the resin composition, making the molding easier. The weight-average molecular weight of the P3HA (B) is preferably from 40 × 10⁴ to 200 × 10⁴, more preferably from 50 × 10⁴ to 100 × 10⁴, and even more preferably from 60 × 10⁴ to 90 × 10⁴.

The poly(3-hydroxyalkanoate) copolymer (B) is a copolymer that contains 3-hydroxybutyrate units and other hydroxyalkanoate units and in which the proportion of the other hydroxyalkanoate units is from 1 to 23 mol%. The fact that the proportion of the other hydroxyalkanoate is in this range makes it possible to keep the torque during melting and kneading to a relatively low level and improve the tensile strain of the molded article. In addition, the poly(3-hydroxyalkanoate) resin composition can have a good balance of flexibility and stiffness, and the productivity can be improved. The proportion is more preferably from 1 to 20 mol%, even more preferably from 1 to 15 mol%, and particularly preferably from 1 to 10 mol%. The proportion may be at least 2 mol% or at least 3 mol%. The proportion is preferably up to 8 mol% in order to further increase the tensile strain of the molded article.

The proportions of the P3HA (A) and the P3HA (B) are preferably such that the proportion of the P3HA (A) is from more than 80 to 99.9 wt% and the proportion of the P3HA (B) is from 0.1 to less than 20 wt% based on 100 wt% of the total amount of the two components. Using the two components in such proportions makes it possible to keep the torque during melting and kneading to a relatively low level and improve the tensile strain of the molded article. If the proportion of the P3HA (A) is 80 wt% or less and the proportion of the P3HA (B) is 20 wt% or more, the torque during melting and kneading increases, so that an undesirably amount of heat might be generated to cause thermal decomposition of the P3HA (A) and the P3HA (B).

More preferably, the proportion of the P3HA (A) is from 81 to 99 wt% and the proportion of the P3HA (B) is from 1 to 19 wt%. Even more preferably, the proportion of the P3HA (A) is from 85 to 97 wt% and the proportion of the P3HA (B) is from 3 to 15 wt%. The proportion of the P3HA (A) may be 95 wt% or less and the proportion of the P3HA (B) may be 5 wt% or more.

The molded article or resin composition according to the present embodiment is an unfoamed molded article or resin composition unlike foamed resin particles as disclosed in WO 2019/146555 A1 or WO 2022/054870 A1 and is preferably a molded article or resin composition substantially free of internal bubbles.

Since the molded article or resin composition according to the present embodiment is not foamed, the molded article or resin composition has a relatively high density. The density is preferably more than 0.3 g/cm³, more preferably 0.5 g/cm³ or more, and even more preferably 0.7 g/cm³ or more. The upper limit of the density is not limited to a particular value. For example, the density may be up to 1.6 g/cm³ or up to 1.4 g/cm³. The density of the molded article or resin composition can be determined by a method as described in JIS K 0061 (Test methods for density and relative density of chemical products) or a method as described in JIS Z 8807 (Methods of measuring density and specific gravity of solid).

The molded article or resin composition according to the present embodiment may optionally contain, in addition to the P3HA (A) and the P3HA (B), at least one component selected from the group consisting of a poly(3-hydroxybutyrate) resin (C), an additional resin, a nucleating agent, and a lubricant.

### <Poly(3-Hydroxybutyrate) Resin (C)>

The molded article or resin composition according to the present embodiment may further contain a poly(3-hydroxybutyrate) resin (C). In this case, the crystallization following melting and kneading is accelerated, and the productivity in the production of the molded article can be improved.

The poly(3-hydroxybutyrate) resin (C) refers to a homopolymer of 3-hydroxybutyrate or a polymer containing 3-hydroxybutyrate units and a small amount of hydroxyalkanoate units other than 3-hydroxybutyrate units. To be specific, the poly(3-hydroxybutyrate) resin (C) preferably contains more than 99 mol% to 100 mol% of 3-hydroxybutyrate units in the total constituent monomer units.

Those hydroxyalkanoate units other than 3-hydroxybutyrate units which may be contained in the poly(3-hydroxybutyrate) resin (C) are not limited to a particular type and may be any hydroxyalkanoate units copolymerizable with 3-hydroxybutyrate units. Examples of the other hydroxyalkanoate units include 3-hydroxyalkanoate units other than 3-hydroxybutyrate units and hydroxyalkanoate units (such as 4-hydroxyalkanoate units) other than 3-hydroxyalkanoate units. In particular, 3-hydroxyhexanoate units are preferred.

The weight-average molecular weight of the poly(3-hydroxybutyrate) resin (C) may be set as appropriate but is preferably from 1 × 10⁴ to 100 × 10⁴. When the weight-average molecular weight of the resin (C) is 1 × 10⁴ or more, the use of the resin (C) is more likely to provide the crystallization-accelerating effect. The weight-average molecular weight is more preferably 10 × 10⁴ or more, even more preferably 20 × 10⁴ or more, and particularly preferably 25 × 10⁴ or more. When the weight-average molecular weight of the resin (C) is 100 × 10⁴ or less, foreign substances are less likely to occur in the molded article. In addition, the processability of the resin composition tends to be further improved, and the molding tends to become easier. The weight-average molecular weight is more preferably 80 × 10⁴ or less, even more preferably 50 × 10⁴ or less, and particularly preferably 40 × 10⁴ or less.

The amount of the poly(3-hydroxybutyrate) resin (C) may be set as appropriate. However, in order to ensure that the use of the resin (C) provides the crystallization-accelerating effect and to further improve the biodegradability of the resin composition, the amount of the poly(3-hydroxybutyrate) resin (C) is preferably from 0.1 to 50 parts by weight per 100 parts by weight of the total amount of the P3HA (A) and the P3HA (B). The amount of the poly(3-hydroxybutyrate) resin (C) is more preferably from 0.5 to 40 parts by weight, even more preferably from 1 to 30 parts by weight, and particularly preferably from 3 to 20 parts by weight. The amount of the resin (C) may be up to 15 parts by weight or up to 10 parts by weight. The poly(3-hydroxybutyrate) resin (C) need not be contained in the molded article or resin composition.

### <Additional Resin>

The molded article or resin composition may contain an additional resin which corresponds to none of the P3HA (A), the P3HA (B), and the poly(3-hydroxybutyrate) resin (C). The additional resin is not limited to a particular type but preferably a resin that does not significantly deteriorate the compatibility or moldability in molding of the resin composition or the mechanical properties of the resulting molded article. When the resulting molded article is used in an application that requires biodegradability, the additional resin is preferably a biodegradable resin.

Examples of the additional resin include: an aliphatic polyester having a structure formed by polycondensation of an aliphatic diol and an aliphatic dicarboxylic acid; and an aliphatic-aromatic polyester formed using both an aliphatic compound and an aromatic compound as monomers. Examples of the aliphatic polyester include polyethylene succinate, polybutylene succinate (PBS), polyhexamethylene succinate, polyethylene adipate, polybutylene adipate, polyhexamethylene adipate, polybutylene succinate adipate (PBSA), polyethylene sebacate, and polybutylene sebacate. Examples of the aliphatic-aromatic polyester include poly(butylene adipate-co-butylene terephthalate) (PBAT), poly(butylene sebacate-co-butylene terephthalate), poly(butylene azelate-co-butylene terephthalate), and poly(butylene succinate-co-butylene terephthalate) (PBST). One such additional resin may be used alone, or two or more such additional resins may be used in combination.

When the molded article or resin composition contains the additional resin, the amount of the additional resin is preferably 250 parts by weight or less, more preferably 100 parts by weight or less, even more preferably 50 parts by weight or less, and particularly preferably 20 parts by weight or less per 100 parts by weight of the total amount of the P3HA (A) and the P3HA (B). The amount of the additional resin may be 10 parts by weight or less, 5 parts by weight or less, or 1 part by weight or less. The lower limit of the amount of the additional resin is not limited to a particular value, and the amount of the additional resin may be 0 part by weight.

### <Nucleating Agent>

The molded article or resin composition may further contain a nucleating agent. When the molded article or resin composition contains a nucleating agent, the crystallization of the resin components can be accelerated to increase the molding speed, the productivity, etc.

The nucleating agent is not limited to a particular type and may be a conventionally known nucleating agent. Examples include: pentaerythritol; inorganic substances such as boron nitride, titanium oxide, talc, layered silicate, calcium carbonate, sodium chloride, and metal phosphates; naturally occurring sugar alcohol compounds such as erythritol, galactitol, mannitol, and arabitol; polyvinyl alcohol; chitin; chitosan; polyethylene oxide; amides of aliphatic carboxylic acids; salts of aliphatic carboxylic acids; aliphatic alcohols; esters of aliphatic carboxylic acids; dicarboxylic acid derivatives such as dimethyl adipate, dibutyl adipate, diisodecyl adipate, and dibutyl sebacate; cyclic compounds such as indigo, quinacridone, and quinacridone magenta which have in their molecule a functional group C=O and a functional group selected from NH, S, and O; sorbitol derivatives such as bis(benzylidene) sorbitol and bis(p-methylbenzylidene) sorbitol; compounds such as pyridine, triazine, and imidazole which contain a nitrogen-containing heteroaromatic core; phosphoric ester compounds; bisamides of higher fatty acids; and metal salts of higher fatty acids. One of these nucleating agents may be used alone, or two or more thereof may be used in combination.

The amount of the nucleating agent is not limited to a particular range and may be any amount as long as the nucleating agent can accelerate the crystallization of the resin components. The amount of the nucleating agent is preferably from 0.05 to 12 parts by weight, more preferably from 0.1 to 10 parts by weight, and even more preferably from 0.5 to 8 parts by weight per 100 parts by weight of the total amount of the P3HA (A) and the P3HA (B). When the amount of the nucleating agent is in the above range, the effect of the nucleating agent can be obtained while minimizing a reduction in viscosity during molding or in physical properties of the molded article.

The molded article or resin composition may contain substantially no sugar alcohol such as pentaerythritol. The expression "contain substantially no sugar alcohol" is intended to mean that the amount of any sugar alcohol is less than 0.05 parts by weight per 100 parts by weight of the total amount of the P3HA (A) and the P3HA (B). The amount may be less than 0.01 parts by weight. In an aspect where the molded article or resin composition contains substantially no sugar alcohol, bleeding out of any sugar alcohol from the molded article or resin composition and the concomitant soiling of production equipment can be avoided. According to the present embodiment, high productivity can be achieved even when the molded article or resin composition contains substantially no sugar alcohol serving as a nucleating agent.

### <Lubricant>

The molded article or resin composition may further contain a lubricant. When the molded article or resin composition contains a lubricant, the surface smoothness of the molded article can be improved. The lubricant is not limited to a particular type. Preferably, the molded article or resin composition contains at least one lubricant selected from the group consisting of behenamide, stearamide, erucamide, and oleamide. When the molded article or resin composition contains any of these lubricants, the molded article can have good lubricity (in particular, external lubricity). In terms of improvement in processability and productivity, the molded article or resin composition preferably contains behenamide and/or erucamide.

The lubricant used may be behenamide, stearamide, erucamide, oleamide, or a combination of two or more thereof. Alternatively, behenamide, stearamide, erucamide, or oleamide may be used in combination with a lubricant other than them (hereinafter referred to as "other lubricant"). Examples of the other lubricant include, but are not limited to: alkylene fatty acid amides such as methylene bis(stearamide) and ethylene bis(stearamide); polyethylene wax; oxidized polyester wax; glycerin monofatty acid esters such as glycerin monostearate, glycerin monobehenate, and glycerin monolaurate; organic acid monoglycerides such as succinylated monoglycerides of saturated fatty acids; sorbitan fatty acid esters such as sorbitan behenate, sorbitan stearate, and sorbitan laurate; polyglycerin fatty acid esters such as diglycerin stearate, diglycerin laurate, tetraglycerin stearate, tetraglycerin laurate, decaglycerin stearate, and decaglycerin laurate; and higher alcohol fatty acid esters such as stearyl stearate. One such other lubricant may be used alone, or two or more such other lubricants may be used in combination.

The amount of the lubricant (when two or more lubricants are used, the total amount of the lubricants) is not limited to a particular range and may be any amount as long as the lubricant(s) can provide lubricity to the molded article. The (total) amount of the lubricant(s) is preferably from 0.01 to 20 parts by weight, more preferably from 0.05 to 10 parts by weight, even more preferably from 0.5 to 10 parts by weight, still even more preferably from 0.5 to 5 parts by weight, and particularly preferably from 0.7 to 4 parts by weight per 100 parts by weight of the total amount of the P3HA (A) and the P3HA (B). When the (total) amount of the lubricant(s) is in the above range, the effect of the lubricant(s) can be obtained while avoiding bleeding out of the lubricant(s) to the surface of the molded article.

### <Other Components>

The molded article or resin composition can contain other components such as a plasticizer, an inorganic filler, an antioxidant, an ultraviolet absorber, a colorant such as a dye or pigment, and an antistatic agent, to the extent that the other components do not impair the function of the molded article.

Examples of the plasticizer include, but are not limited to: modified glycerin compounds such as glycerin diacetomonolaurate, glycerin diacetomonocaprylate, and glycerin diacetomonodecanoate; adipic ester compounds such as diethylhexyl adipate, dioctyl adipate, and diisononyl adipate; polyether ester compounds such as polyethylene glycol dibenzoate, polyethylene glycol dicaprylate, and polyethylene glycol diisostearate; benzoic ester compounds; epoxidized soybean oil; 2-ethylhexyl esters of epoxidized fatty acids; and sebacic monoesters. One of these plasticizers may be used alone, or two or more thereof may be used in combination. Among the above plasticizers, the modified glycerin compounds and the polyether ester compounds are preferred in terms of availability and effectiveness. One of these compounds may be used alone, or two or more thereof may be used in combination.

Examples of the inorganic filler include, but are not limited to, clay, synthetic silicon, carbon black, barium sulfate, mica, glass fibers, whiskers, carbon fibers, calcium carbonate, magnesium carbonate, glass powder, metal powder, kaolin, graphite, molybdenum disulfide, and zinc oxide. One of these inorganic fillers may be used alone, or two or more thereof may be used in combination.

Examples of the antioxidant include, but are not limited to, phenol antioxidants, phosphorus antioxidants, and sulfur antioxidants. One of these antioxidants may be used alone, or two or more thereof may be used in combination.

Examples of the ultraviolet absorber include, but are not limited to, benzophenone compounds, benzotriazole compounds, triazine compounds, salicylic acid compounds, cyanoacrylate compounds, and nickel complex salt compounds. One of these ultraviolet absorbers may be used alone, or two or more thereof may be used in combination.

Examples of the colorant such as a pigment or dye include, but are not limited to: inorganic colorants such as titanium oxide, calcium carbonate, chromium oxide, copper suboxide, calcium silicate, iron oxide, carbon black, graphite, titanium yellow, and cobalt blue; soluble azo pigments such as lake red, lithol red, and brilliant carmine; insoluble azo pigments such as dinitroaniline orange and fast yellow; phthalocyanine pigments such as monochlorophthalocyanine blue, polychlorophthalocyanine blue, and polybromophthalocyanine green; condensed polycyclic pigments such as indigo blue, perylene red, isoindolinone yellow, and quinacridone red; and dyes such as Oracet yellow. One of these colorants may be used alone, or two or more thereof may be used in combination.

Examples of the antistatic agent include, but are not limited to: low-molecular-weight antistatic agents such as fatty acid ester compounds, aliphatic ethanolamine compounds, and aliphatic ethanolamide compounds; and high-molecular-weight antistatic agents. One of these antistatic agents may be used alone, or two or more thereof may be used in combination.

The amount of each of the other components described above is not limited to a particular range and may be any amount as long as the effect of the invention can be achieved. The amount of each of the other components can be set as appropriate by those skilled in the art.

The molded article according to the present embodiment can exhibit an improved tensile strain. The molded article preferably meets the following quantitative requirement concerning the improvement in tensile strain.

Requirement: The percentage increase of the tensile strain exhibited by the molded article according to the present embodiment is 5% or more relative to the tensile strain exhibited by a molded article for comparison that contains the same ingredients as the molded article according to the present embodiment except that the molded article for comparison does not contain the poly(3-hydroxyalkanoate) copolymer (B).

The tensile strain can be measured using a measurement device described in "Examples" under the conditions described in "Examples". The percentage increase in tensile strain is preferably 10% or more, more preferably 20% or more, and even more preferably 30% or more. The upper limit of the percentage increase in tensile strain is not limited to a particular value, and the percentage increase in tensile strain may be up to 100% or up to 60%.

### [Method for Producing Resin Composition]

The resin composition according to the present embodiment can be produced by a known method. A specific example is a method in which the P3HA (A), the P3HA (B), and optionally the poly(3-hydroxybutyrate) resin (C) and other optional components are melted and kneaded by means such as an extruder, a kneader, a Banbury mixer, or a roll mill. In the melting and kneading, the components are preferably mixed with care so as to avoid a molecular weight loss caused by thermal decomposition. Alternatively, the resin composition can be produced by dissolving the components in a solvent and then removing the solvent.

In the production by melting and kneading, each of the components may be individually placed into a device such as an extruder, or the components may be mixed first and then the mixture may be placed into a device such as an extruder. When the melting and kneading is performed by an extruder, the resulting resin composition may be extruded into a strand, and then the strand may be cut into particles of bar shape, cylindrical shape, elliptic cylindrical shape, spherical shape, cubic shape, or rectangular parallelepiped shape.

The resin temperature during the melting and kneading cannot be definitely specified as the resin temperature depends on factors such as the melting point and melt viscosity of the resins used. In terms of achieving high dispersibility while avoiding thermal decomposition of the P3HA (A) and the P3HA (B), the resin temperature is preferably from 140 to 200°C, more preferably from 150 to 195°C, and even more preferably from 160 to 190°C.

### <Method for Producing Molded Article>

The molded article can be produced from the resin composition. The molding method is not limited to using a particular technique and may be any method including the process of melting and kneading the resin composition under heating and then cooling and solidifying the resin composition.

The shear rate during the molding cannot be definitely specified as the shear rate depends on factors such as the molding method, the size of the molding machine, and the melting point and melt viscosity of the resins used. In terms of achieving high dispersibility while avoiding thermal decomposition of the P3HA (A) and the P3HA (B), the shear rate is preferably 10 sec⁻¹ or more, more preferably 30 sec⁻¹ or more, and even more preferably 50 sec⁻¹ or more. The upper limit of the shear rate is not limited to a particular value, and the shear rate may be up to 100,000 sec⁻¹ or up to 500 sec⁻¹.

The resin temperature during the molding cannot be definitely specified as the resin temperature depends on factors such as the melting point and melt viscosity of the resins used. In terms of achieving high dispersibility while avoiding thermal decomposition of the P3HA (A) and the P3HA (B), the resin temperature is preferably from 140 to 200°C, more preferably from 150 to 195°C, and even more preferably from 160 to 190°C.

The molded article according to the present embodiment is suitable for use in various fields such as agricultural industry, fishery industry, forestry industry, horticultural industry, medical industry, hygiene industry, food industry, apparel industry, non-apparel industry, packing industry, automotive industry, building material industry, and other industries.

In the following items, preferred aspects of the present disclosure are listed. The present invention is not limited to the following items.

### [Item 1]

A molded article containing a poly(3-hydroxyalkanoate) resin composition, wherein
the resin composition contains:
   a poly(3-hydroxyalkanoate) copolymer (A) having a weight-average molecular weight of 20 × 10⁴ to 100 × 10⁴; and
   a poly(3-hydroxyalkanoate) copolymer (B) having a higher weight-average molecular weight than the poly(3-hydroxyalkanoate) copolymer (A), wherein
the term "weight-average molecular weight" as used herein refers to a polystyrene-equivalent weight-average molecular weight determined by gel permeation chromatography using a chloroform solvent,
the poly(3-hydroxyalkanoate) copolymer (B) is a copolymer that contains 3-hydroxybutyrate units and other hydroxyalkanoate units and in which a proportion of the other hydroxyalkanoate units is from 1 to 23 mol%, and
an amount of the poly(3-hydroxyalkanoate) copolymer (A) is more than 80 wt% of a total amount of the poly(3-hydroxyalkanoate) copolymer (A) and the poly(3-hydroxyalkanoate) copolymer (B).

### [Item 2]

The molded article according to item 1, wherein the weight-average molecular weight of the poly(3-hydroxyalkanoate) copolymer (B) is at least 20 × 10⁴ higher than the weight-average molecular weight of the poly(3-hydroxyalkanoate) copolymer (A).

### [Item 3]

The molded article according to item 1 or 2, wherein the poly(3-hydroxyalkanoate) copolymer (A) and/or the poly(3-hydroxyalkanoate) copolymer (B) is at least one copolymer selected from the group consisting of poly(3-hydroxybutyrate-co-3-hydroxyvalerate), poly(3-hydroxybutyrate-co-3-hydroxyhexanoate), poly(3-hydroxybutyrate-co-3-hydroxyvalerate-co-3-hydroxyhexanoate), poly(3-hydroxybutyrate-co-4-hydroxybutyrate), poly(3-hydroxybutyrate-co-3-hydroxyoctanoate), and poly(3-hydroxybutyrate-co-3-hydroxydecanoate).

### [Item 4]

The molded article according to any one of items 1 to 3, wherein the poly(3-hydroxyalkanoate) copolymer (A) and/or the poly(3-hydroxyalkanoate) copolymer (B) is poly(3-hydroxybutyrate-co-3-hydroxyhexanoate).

### [Item 5]

The molded article according to any one of items 1 to 4, wherein the poly(3-hydroxyalkanoate) copolymer (A) is a copolymer that contains 3-hydroxybutyrate units and other hydroxyalkanoate units and in which a proportion of the other hydroxyalkanoate units is from 1 to 23 mol%.

### [Item 6]

The molded article according to any one of items 1 to 5, wherein the molded article is produced by melting and kneading the resin composition and then molding the resin composition.

### [Item 7]

A method for producing the molded article according to any one of items 1 to 6, the method including the step of melting and kneading the poly(3-hydroxyalkanoate) resin composition and then molding the poly(3-hydroxyalkanoate) resin composition.

### Examples

Hereinafter, the present invention will be described more specifically using examples. The present invention is not limited by the examples in any respect. In the examples, the units "parts" and "%" are based on weight.

### <Compounds Used in Examples and Comparative Examples>

### <P3HA (A)>

The following poly(3-hydroxybutyrate-co-3-hydroxyhexanoate) (P3HB3HH) (Kaneka Biodegradable Polymer Green Planet^{™} manufactured by Kaneka Corporation) was used as the P3HA (A).

A-1: Powdery P3HB3HH, (3-hydroxybutyrate)/(3-hydroxyhexanoate) = 94.7/5.3 (mol%/mol%), weight-average molecular weight Mw as measured by GPC = 40 × 10⁴

### <P3HA (B)>

The following types of poly(3-hydroxybutyrate-co-3-hydroxyhexanoate) (P3HB3HH) (Kaneka Biodegradable Polymer Green Planet^{™} manufactured by Kaneka Corporation) were used as the P3HA (B).
B-1: Powdery P3HB3HH, (3-hydroxybutyrate)/(3-hydroxyhexanoate) = 94.9/5.1 (mol%/mol%), weight-average molecular weight Mw as measured by GPC = 76 × 10⁴
B-2: Powdery P3HB3HH, (3-hydroxybutyrate)/(3-hydroxyhexanoate) = 94.8/5.2 (mol%/mol%), weight-average molecular weight Mw as measured by GPC = 89 × 10⁴
B-3: Powdery P3HB3HH, (3-hydroxybutyrate)/(3-hydroxyhexanoate) = 89.9/10.1 (mol%/mol%), weight-average molecular weight Mw as measured by GPC = 78 × 10⁴
B-4: Powdery P3HB3HH, (3-hydroxybutyrate)/(3-hydroxyhexanoate) = 89.5/10.5 (mol%/mol%), weight-average molecular weight Mw as measured by GPC = 86 × 10⁴

The monomer proportions in P3HB3HH were determined as follows. To about 20 mg of P3HB3HH were added 1 mL of sulfuric acid-methanol mixture (15:85) and 1 mL of chloroform, and the receptacle was tightly closed. The contents of the receptacle were heated at 100°C for 140 minutes to obtain a methyl ester of a P3HB3HH decomposition product. After cooling, 0.5 mL of deionized water was added to the methyl ester. The methyl ester and the deionized water were thoroughly mixed, and the mixture was left until it divided into an aqueous layer and an organic layer. After that, the organic layer was separately collected, and the monomer unit composition of the P3HB3HH decomposition product in the organic layer was analyzed by capillary gas chromatography. The proportion of 3-hydroxyhexanoate was calculated from a peak area obtained by the chromatography.

### <Measurement of Weight-Average Molecular Weight>

The weight-average molecular weight of P3HB3HH was measured as follows. First, the resin as a measurement object was dissolved in chloroform, and the solution was heated in a hot water bath at 60°C for 0.5 hours. The heated solution was filtered through a disposable filter made of PTFE and having a pore diameter of 0.45 µm, and the filtrate was then subjected to GPC analysis under the conditions listed below to determine the weight-average molecular weight.

GPC system: High-performance liquid chromatograph 20A system manufactured by Shimadzu Corporation

Columns: K-G 4A (one column) and K-806M (two columns) manufactured by Showa Denko K.K.
Sample concentration: 1 mg/ml
Eluent: Chloroform solution
Eluent flow rate: 1.0 ml/min
Volume of injected sample: 100 µL
Analysis time: 30 minutes
Standard sample: Standard polystyrene

### <Lubricants>

Behenamide ("BNT 22H" manufactured by Nippon Fine Chemical Co., Ltd., which will be hereinafter referred to as "BA") and erucamide ("Neutron S" manufactured by Nippon Fine Chemical Co., Ltd., which will be hereinafter referred to as "EA") were used as lubricants.

The evaluation procedures described below were performed in Examples and Comparative Examples.

### <Evaluation of Torque During Kneading>

Each of the resin compositions obtained in Examples 1 to 4 or Comparative Examples 1 and 2 was melted and kneaded using Xplore series MC5, a small-sized kneader manufactured by DSM, at an extrusion temperature of 170°C and a screw rotational speed of 100 rpm. The maximum torque reached during the melting and kneading was evaluated.

### <Evaluation of Tensile Strain>

Each of the resin compositions obtained in Examples 1 to 4 or Comparative Examples 1 and 2 was kneaded using a testing roll machine (diameter = 8 inches, length = 20 inches) manufactured by Kansai Roll Co., Ltd. at a set temperature of 140°C, a front roll rotational speed of 17 rpm, and a rear roll rotational speed of 16 rpm for 2 minutes, and thus the resin composition was formed into a sheet with a thickness of 0.5 mm. Two sheet pieces were cut out from the sheet and placed one on the other in such a manner that the two sheet pieces were orthogonal to each other. These two sheet pieces were combined into a 1-mm-thick pressed sheet by hot-pressing them using a compression molding machine (ASFA-37H/C) manufactured by Sinto Metal Industries, Ltd. at a set temperature of 160°C and a pressure of 10 MPa. The pressed sheet was cut to prepare a tensile test specimen having the shape of a specimen No. 2 as specified in JIS K 6251. The tensile strain of the prepared specimen was evaluated by a tensile test performed using Autograph AG-X manufactured by Shimadzu Corporation under the following conditions.

Specimen size: thickness = 1.0 mm, length (between chucks) = 50 mm or more, width = 20 mm
Temperature: 23°C
Tensile speed : 2 mm/min
Distance between chucks: 50 mm
Distance between gauge lines: 20 mm

In Examples 1 to 4 and Comparative Example 2, the percentage increase (%) of the obtained tensile strain relative to the tensile strain obtained in Comparative Example 1 was calculated.

### (Example 1)

A total amount of 100 parts by weight of 90 wt% of the poly(3-hydroxyalkanoate) copolymer (A-1) and 10 wt% of the poly(3-hydroxyalkanoate) copolymer (B-1) were dry-blended with 0.5 parts by weight of behenamide (BA) and 0.5 parts by weight of erucamide (EA). The blend was then melted and kneaded and subjected to tensile strain evaluation by the methods as described above. The results are shown in Table 1.

### (Examples 2 to 4)

Resin compositions were prepared in the same manner as that of Example 1, except that the type of the poly(3-hydroxyalkanoate) copolymer (B) was changed as shown in Table 1, and they were melted and kneaded and subjected to tensile strain evaluation by the methods as described above. The results are shown in Table 1.

### (Comparative Example 1)

An amount of 100 parts by weight of the poly(3-hydroxyalkanoate) copolymer (A-1) was dry-blended with 0.5 parts by weight of behenamide (BA) and 0.5 parts by weight of erucamide (EA). The blend was then melted and kneaded and subjected to tensile strain evaluation by the methods as described above. The results are shown in Table 1.

### (Comparative Example 2)

An amount of 100 parts by weight of the poly(3-hydroxyalkanoate) copolymer (B-1) was dry-blended with 0.5 parts by weight of behenamide (BA) and 0.5 parts by weight of erucamide (EA). The blend was then melted and kneaded and subjected to tensile strain evaluation by the methods as described above. The results are shown in Table 1.

**[Table 1]**

| | | Ex. 1 | Ex. 2 | Ex. 3 | Ex. 4 |
|---|---|---|---|---|---|
| P3HA (A) [wt%] | A-1 (Mw: 40 × 10⁴) | 90 | 90 | 90 | 90 |
| | | | | | |
| P3HA (B) [wt%] | B-1 (Mw: 76 × 10⁴) | 10 | | | |
| | B-2 (Mw: 89 × 10⁴) | | 10 | | |
| | B-3 (Mw: 78 × 10⁴) | | | 10 | |
| | B-4 (Mw: 86 × 10⁴) | | | | 10 |
| Lubricant [parts by weight] | BA | 0.5 | 0.5 | 0.5 | 0.5 |
| | EA | 0.5 | 0.5 | 0.5 | 0.5 |
| Torque during kneading | [N] | 823 | 998 | 848 | 965 |
| Tensile strain | [%] | 11.9 | 12.7 | 11.4 | 12.9 |
| Percentage increase in tensile strain | [%] | 37.0 | 40.9 | 34.2 | 41.9 |

| | | Comp. 1 | Comp. 2 |
|---|---|---|---|
| P3HA (A) [wt%] | A-1 (Mw: 40 × 10⁴) | 100 | |
| | | | |
| P3HA (B) [wt%] | B-1 (Mw: 76 × 10⁴) | | 100 |
| | | | |
| Lubricant [parts by weight] | BA | 0.5 | 0.5 |
| | EA | 0.5 | 0.5 |
| Torque during kneading | [N] | 813 | 2055 |
| Tensile strain | [%] | 7.5 | 11.6 |
| Percentage increase in tensile strain | [%] | - | 35.3 |

Table 1 shows that in Examples 1 to 4, the torque during melting and kneading was kept to a relatively low level and the tensile strain of each molded article was considerably increased.

In contrast, in Comparative Example 1, the tensile strain of the molded article was as low as 7.5%. In Comparative Example 2, the torque during melting and kneading was very high.

The above results reveal that when the P3HA (A) and the P3HA (B) are not used in combination but each of the resins is used alone as in Comparative Example 1 or 2, the tensile strain of the resulting molded article is low or the torque during melting and kneading is high. Examples 1 to 4 demonstrate that the combined use of the P3HA (A) and the P3HA (B) makes it possible to achieve a tensile strain comparable to or higher than that in Comparative Example 2 and keep the torque during melting and kneading to a relatively low level.

## Claims

1. A molded article comprising a poly(3-hydroxyalkanoate) resin composition, wherein
the resin composition comprises:
a poly(3-hydroxyalkanoate) copolymer (A) having a weight-average molecular weight of 20 × 10⁴ to 100 × 10⁴; and
a poly(3-hydroxyalkanoate) copolymer (B) having a higher weight-average molecular weight than the poly(3-hydroxyalkanoate) copolymer (A), wherein
the term "weight-average molecular weight" as used herein refers to a polystyrene-equivalent weight-average molecular weight determined by gel permeation chromatography using a chloroform solvent,
the poly(3-hydroxyalkanoate) copolymer (B) is a copolymer that comprises 3-hydroxybutyrate units and other hydroxyalkanoate units and in which a proportion of the other hydroxyalkanoate units is from 1 to 23 mol%, and
an amount of the poly(3-hydroxyalkanoate) copolymer (A) is more than 80 wt% of a total amount of the poly(3-hydroxyalkanoate) copolymer (A) and the poly(3-hydroxyalkanoate) copolymer (B).

2. The molded article according to claim 1, wherein the weight-average molecular weight of the poly(3-hydroxyalkanoate) copolymer (B) is at least 20 × 10⁴ higher than the weight-average molecular weight of the poly(3-hydroxyalkanoate) copolymer (A).

3. The molded article according to claim 1 or 2, wherein the poly(3-hydroxyalkanoate) copolymer (A) and/or the poly(3-hydroxyalkanoate) copolymer (B) is at least one copolymer selected from the group consisting of poly(3-hydroxybutyrate-co-3-hydroxyvalerate), poly(3-hydroxybutyrate-co-3-hydroxyhexanoate), poly(3-hydroxybutyrate-co-3-hydroxyvalerate-co-3-hydroxyhexanoate), poly(3-hydroxybutyrate-co-4-hydroxybutyrate), poly(3-hydroxybutyrate-co-3-hydroxyoctanoate), and poly(3-hydroxybutyrate-co-3-hydroxydecanoate).

4. The molded article according to claim 1 or 2, wherein the poly(3-hydroxyalkanoate) copolymer (A) and/or the poly(3-hydroxyalkanoate) copolymer (B) is poly(3-hydroxybutyrate-co-3-hydroxyhexanoate).

5. The molded article according to claim 1 or 2, wherein the poly(3-hydroxyalkanoate) copolymer (A) is a copolymer that comprises 3-hydroxybutyrate units and other hydroxyalkanoate units and in which a proportion of the other hydroxyalkanoate units is from 1 to 23 mol%.

6. The molded article according to claim 1 or 2, wherein the molded article is produced by melting and kneading the resin composition and then molding the resin composition.

7. A method for producing the molded article according to claim 1 or 2, the method comprising the step of melting and kneading the poly(3-hydroxyalkanoate) resin composition and then molding the poly(3-hydroxyalkanoate) resin composition.
